(19) **Europäisches Patentamt**

**European Patent Office**

**Office européen des brevets**

(11) **EP 1 395 885 B1**

(12) **EUROPÄISCHE PATENTSCHRIFT**

(45) Veröffentlichungstag und Bekanntmachung des Hinweises auf die Patenterteilung:
**22.02.2006 Patentblatt 2006/08**

(21) Anmeldenummer: **02735341.6**

(22) Anmeldetag: **07.05.2002**

(51) Int Cl.:
***G05B 19/414*** *(2006.01)*

(86) Internationale Anmeldenummer:
**PCT/EP2002/004993**

(87) Internationale Veröffentlichungsnummer:
**WO 2002/095513 (28.11.2002 Gazette 2002/48)**

(54) **VERFAHREN ZUM BETRIEB EINER POSITIONSMESSEINRICHTUNG**

METHOD FOR OPERATING A POSITION MEASURING DEVICE

PROCEDE D'EXPLOITATION D'UN SYSTEME DE MESURE DE POSITION

(84) Benannte Vertragsstaaten:
**AT BE CH CY DE DK ES FI FR GB GR IE IT LI LU MC NL PT SE TR**

(30) Priorität: **23.05.2001 DE 10125533**

(43) Veröffentlichungstag der Anmeldung:
**10.03.2004 Patentblatt 2004/11**

(73) Patentinhaber: **Dr. Johannes Heidenhain GmbH**
**83292 Traunreut (DE)**

(72) Erfinder:
• **HOFBAUER, Hermann**
**83308 Trostberg (DE)**

• **HUBER, Helmut**
**84518 Garching/Alz (DE)**
• **STRASSER, Erich**
**83308 Trostberg (DE)**
• **BIELSKI, Steffen**
**84518 Garching/Alz (DE)**

(56) Entgegenhaltungen:
**EP-A- 0 408 969**      **EP-A- 0 660 209**
**DE-A- 4 324 197**      **DE-A- 19 724 716**
**DE-A- 19 917 354**

EP 1 395 885 B1

**Beschreibung**

Die vorliegende Erfindung betrifft ein Verfahren zum Betrieb einer Positionsmesseinrichtung.

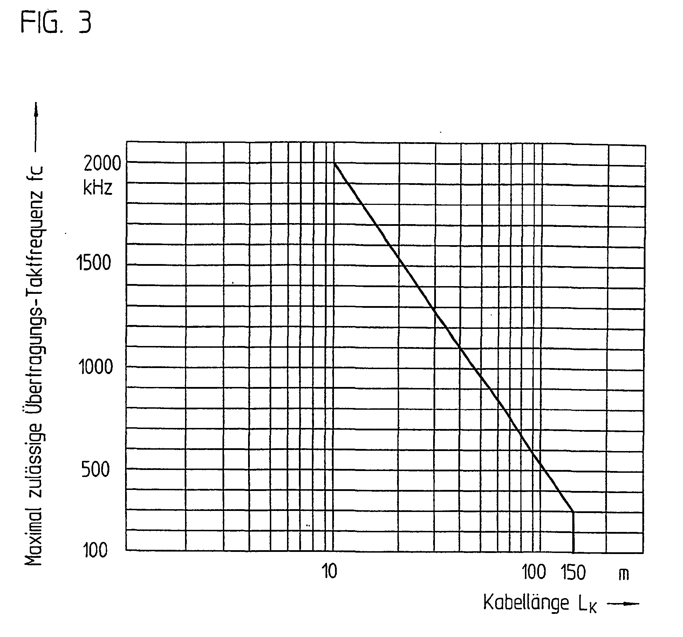

Aus der EP 660 209 B1 der Anmelderin ist ein Verfahren zur seriellen Übertragung von Positionsdaten von einer Positionsmesseinrichtung zu einer nachgeordneten Auswerteeinheit bzw. Folgeelektronik bekannt. Die bidirektionale Datenübertragung auf einer Datenleitung wird hierbei mit Hilfe eines Taktsignales mit definierter Übertragungs-Taktfrequenz auf einer parallelen Taktleitung synchronisiert. Mit der zunehmenden Übertragung von Positionsdaten und eventueller weiterer Daten auf diese Art und Weise steigen auch die Anforderungen hinsichtlich der Übertragungsgeschwindigkeit bzw. der zu übertragenden Datenmengen. Vergrößert sich nunmehr neben der Übertragungsgeschwindigkeit zusätzlich noch die Übertragungsstrecke zwischen der Positionsmesseinrichtung und der Auswerteeinheit, so resultieren schließlich signifikante Signallaufzeiten der übertragenen Daten auf der Datenleitung. Die derart resultierenden Verzögerungszeiten müssen zur korrekten Weiterverarbeitung der verschiedenen Daten berücksichtigt werden. Grund hierfür ist, dass auf Seiten der Auswerteeinheit stets eine eindeutige Zuordnung der auf der Datenleitung übertragenen Datenbits zu den Taktflanken des Taktsignales gegeben sein muss, um die korrekte Weiterverarbeitung der verschiedenen Daten sicherzustellen. Ohne weitere Maßnahmen ergeben sich somit deutliche Beschränkungen im Hinblick auf die maximal zulässige Übertragungsstrecke bzw. Kabellängen und die maximal zulässige Übertragungsgeschwindigkeit bzw. Übertragungs-Taktfrequenz. Der Zusammenhang zwischen maximal zulässiger Übertragungs-Taktfrequenz $f_C$ und Kabellänge $L_K$ ist in Figur 3 veranschaulicht. Aus der Graphik ergibt sich etwa, dass bei Kabellängen von 100m lediglich noch eine maximal zulässige Übertragungs-Taktfrequenz $f_C$ = 500kHz resultiert.

Aufgabe der vorliegenden Erfindung ist es daher, ein Verfahren zum Betrieb einer Positionsmesseinrichtung anzugeben, das es ermöglicht auch über große Übertragungsstrecken mit hoher Übertragungsgeschwindigkeit in serieller Form Daten zwischen der Positionsmesseinrichtung und einer nachgeordneten Auswerteeinheit zu übertragen.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Gegenstand des Anspruches 17 ist eine zur Durchführung des erfindungsgemäßen Verfahrens geeignete Positionsmesseinrichtung.

Erfindungsgemäß wird nunmehr vor dem eigentlichen Messbetrieb die spezifische Signallaufzeit für die jeweilige Konfiguration aus Positionsmesseinrichtung, Übertragungsstrecke und Auswerteeinheit ermittelt. Die derart ermittelte Signallaufzeit wird anschließend bei der Weiterverarbeitung der Positionsdaten und eventueller weiterer Daten geeignet verwendet. So ist sichergestellt, dass mit Hilfe der erfindungsgemäß ermittelten Signallaufzeit nunmehr die korrekte Synchronisation zwischen den auf der Datenleitung übertragenen binären Datenwörtern und den Taktflanken des Taktsignales auf der Taktleitung erfolgen kann. Auf diese Art und Weise kann letztlich gewährleistet werden, dass auch über größere Übertragungsstrecken zuverlässig mit hoher Übertragungsgeschwindigkeit Daten zwischen der Positionsmesseinrichtung und der Auswerteeinheit übertragbar sind. Beispielsweise können nunmehr über Kabellängen bis zu 100m Daten mit Übertragungs-Taktfrequenzen von 4MHz und mehr übertragen werden, was im Vergleich zum Stand der Technik eine Vervielfachung der Übertragungs-Taktfrequenz um den Faktor 8 darstellt.

Vorzugsweise wird mehrmals die Signallaufzeit ermittelt, so dass gewährleistet ist, dass die Signallaufzeit sicher bestimmt wird und nicht durch eventuelle temporäre Störungen auf der Datenübertragungsstrecke ein falscher Wert hierfür ermittelt wird.

Besonders vorteilhaft erweist sich, wenn das erfindungsgemäße Verfahren grundsätzlich nach jeglicher Änderung in der Konfiguration des Systems aus Positionsmesseinrichtung, Datenübertragungsstrecke und Auswerteeinheit und/oder nach jeder Unterbrechung in der Spannungsversorgung der Positionsmesseinrichtung und/oder der Auswerteeinheit erneut durchgeführt wird. Vorzugsweise erfolgt hierbei das erneute Ermitteln der Signallaufzeit automatisch.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt

Figur 1   ein schematisiertes Blockschaltbild eines Systems aus Positionsmesseinrichtung, Übertragungsstrecke und Auswerteeinheit;

Figur 2a - 2e   jeweils ein Signaldiagramm zur Erläuterung des erfindungsgemäßen Verfahrens;

Figur 3   den Zusammenhang zwischen maximal zulässiger Übertragungs-Taktfrequenz $f_C$ und der Kabellänge $L_K$.

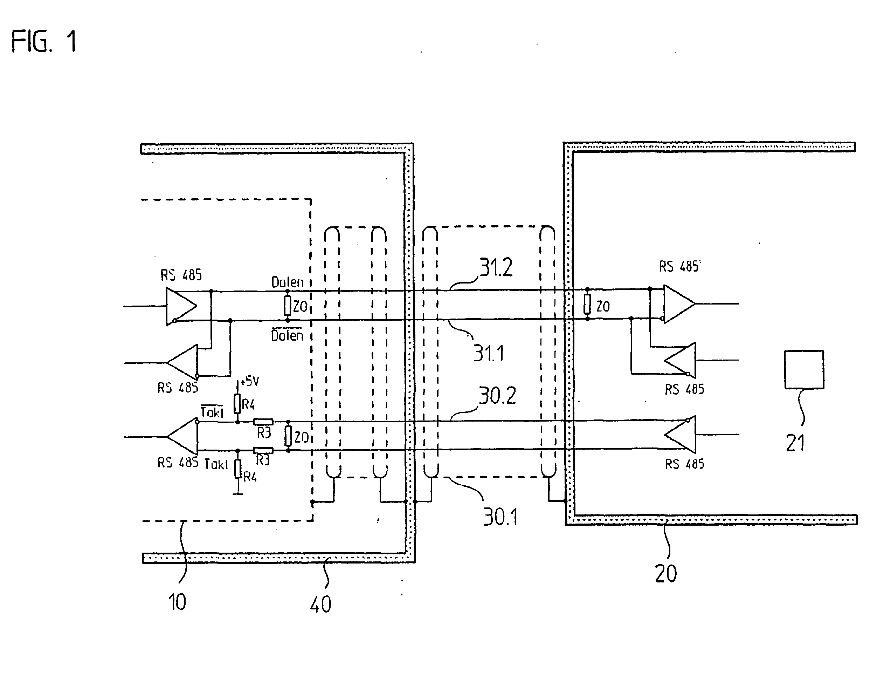

In Figur 1 ist ein schematisiertes Blockschaltbild dargestellt, das die grundsätzliche Konfiguration des Systems aus Positionsmesseinrichtung 10, und nachgeordneter Auswerteeinheit 20 veranschaulicht, die über verschiedene Signal-Leitungen 30.1, 30.2, 31.1, 31.2 entlang der Übertragungsstrecke miteinander verbunden sind. In einer konkreten Anwendung ist die Positionsmesseinrichtung 10 beispielsweise in einem Motorgehäuse 40 angeordnet und erfasst auf Seiten des Motors Positionsdaten bzgl. der Relativ- und/oder Absolutposition des Motoren-Rotors erfassen. Hierzu kann etwa die photoelektrische Abtastung einer auf einer rotierenden Teilscheibe angeordneten Messteilung vorgesehen sein. Es werden hierbei phasenversetzte Abtastsignale in Form von Inkrementalsignalen erzeugt, die auf Seiten der Positionsmesseinrichtung 10 zu absoluten Positionsdaten weiterverarbeitet und geeignet aufbereitet in serieller Form als binäre Datenwörter über die Leitungen 31.1, 31.2 zur Auswerteeinheit 20 übertragen werden. Im Fall der Auswerteeinheit 20 bzw. Folgeelektronik kann es sich beispielsweise um eine übliche Motorsteuerung bzw. Motorregelung handeln, die auf Basis der übertragenen Daten die Regelung des Motors übernimmt.

Alternativ zu einer derartigen Anwendung kann die Positionsmesseinrichtung in einer Werkzeugmaschine eingesetzt werden, um etwa die exakte Position eines Werkzeuges zu einem zu bearbeitenden Werkstück zu bestimmen und die entsprechenden Positionsdaten zur Weiterverarbeitung an eine als numerische Werkzeugmaschinensteuerung ausgebildete Auswerteeinheit zu übertragen. Als Positionsmesseinrichtungen können z.B. Längenmessgeräte, Drehgeber oder Winkelmessgeräte eingesetzt werden.

Desweiteren ist die vorliegende Erfindung selbstverständlich nicht auf die oben erwähnte Art und Weise der physikalischen Erzeugung der Positionsdaten eingeschränkt. Es ist vielmehr möglich, auch Positionsmesseinrichtungen erfindungsgemäß zu betreiben, die auf anderen Abtastprinzipien beruhen.

Die Art und Weise der Datenübertragung zwischen der Positionsmesseinrichtung 10 und der nachgeordneten Auswerteeinheit entspricht im wesentlichen der bekannten bidirektionalen, synchron-seriellen Datenübertragung aus der EP 660 209 B1; diese ist darüberhinaus auch als sog. EnDat®-Interface einschlägig bekannt.

Zur eigentlichen Datenübertragung dienen die Datenleitungen 31.1, 31.2 sowie die Taktleitungen 30.1, 30.2 in Verbindung mit den zur Datenübertragung erforderlichen Transceiver-Bausteinen, die in Figur 1 jeweils mit der Bezeichnung RS 485 versehen sind. Im dargestellten Beispiel sind je zwei Daten- und Taktleitungen 31.1, 31.2, 30.1, 30.2 vorgesehen, auf denen Taktsignal und Daten aus Sicherheitsgründen in invertierter Form übertragen werden. Grundsätzlich erforderlich wäre jedoch nur eine Daten- und eine Taktleitung; nachfolgend ist daher daher lediglich von Takt- oder Datenleitung die Rede.

Während über die Datenleitung 31.1, 31.2 die bidirektionale, serielle Übertragung der binären Datenwörter zwischen der Positionsmesseinrichtung und der Auswerteeinheit erfolgt, wird auf der Taktleitung 30.1, 30.2 ein hochfrequentes Taktsignal von der Auswerteeinheit 20 in Richtung der Posiitonsmesseinrichtung 10 mit einer definierten Übertragungs-Taktfrequenz $f_C$ übertragen, über welches letztlich die gesamte Datenübertragung in bekannter Art und Weise synchronisiert wird.

Da sich wie eingangs bereits erläutert, bei langen Übertragungsstrecken bzw. Kabellängen und gleichzeitig geforderten hohen Datenübertragungsraten signifikante Signallaufzeiten für die auf der Datenleitung 31.1, 31.2 ausgetauschten Daten ergeben, wird nunmehr erfindungsgemäß vor dem eigentlichen Messbetrieb eine definierte Signallaufzeit $t_D$ für die auf Takt- und Datenleitungen 30.1, 30.2, 31.1, 31.2 übertragenen Daten ermittelt. Im nachfolgend erläuterten Beispiel entspricht die Signallaufzeit $t_D$ der Zeit, die Signale benötigen, um von der Auswerteeinheit 20 an die Positionsmesseinrichtung 10 und wieder zurück übertragen zu werden. Diese Signallaufzeit $t_D$ ist jeweils spezifisch für eine bestimmte Konfiguration aus Positionsmesseinrichtung 10, Übertragungsstrecke und Auswerteeinheit 20. Ist die Größe $t_D$ für die jeweilige Konfiguration zuverlässig bekannt, so kann dieselbe seitens der Auswerteeinheit 20 bei der Weiterverarbeitung der von der Positionsmesseinrichtung 10 empfangenen Daten berücksichtigt werden.

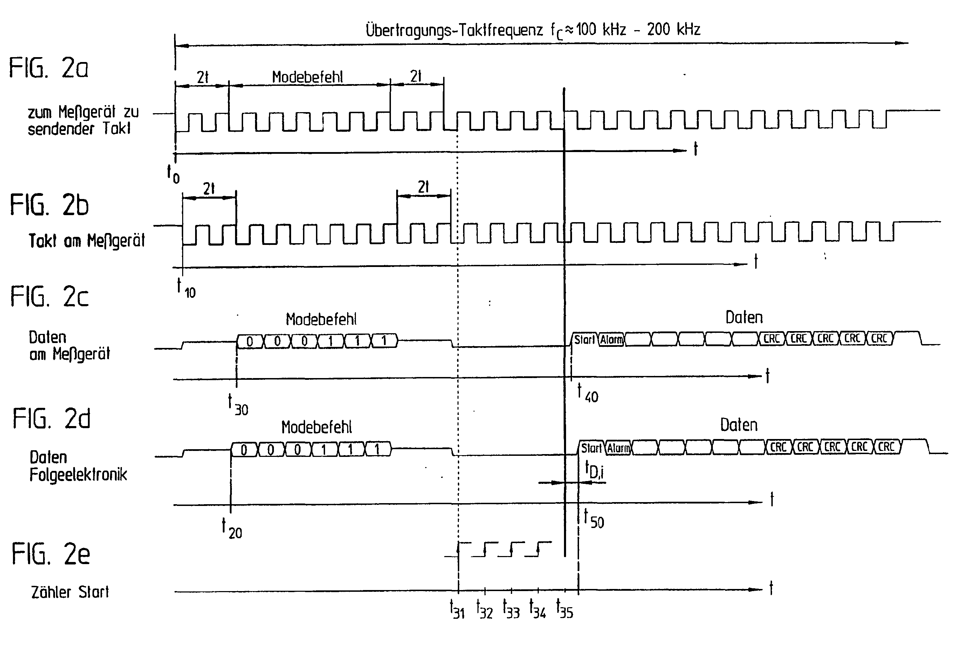

Anhand der Figuren 2a - 2c sei nachfolgend das erfindungsmäße Verfahren zur Ermittlung der Signallaufzeit $t_D$ an einem Beispiel erläutert. Der in den Figuren dargestellte Zeitraum vor dem eigentlichen Messbetrieb zeigt hierbei lediglich einen Teil des erfindungsgemäßen Verfahrens.

In den beiden Figuren 2a und 2b ist der zeitliche Verlauf des Taktsignales auf der Taktleitung 30.1, 30.2 dargestellt. Fig. 2a zeigt den zeitlichen Verlauf des von der Auswerteeinheit zur Positionsmesseinrichtung bzw. Messgerät übertragenen Taktsignales ab dem Zeitpunkt $t_0$, während Fig. 2b den zeitlichen Verlauf des Taktsignales ab dem Zeitpunkt $t_{10}$ an der Positionsmesseinrichtung zeigt. Wie aus den Figuren 2a und 2b erkennbar liegt zwischen den beiden Zeitpunkten $t_0$ und $t_{10}$ ein gewisser zeitlicher Versatz, verursacht durch die endliche Laufzeit des Taktsignales auf der Übertragungsstrecke zwischen der Positionsmesseinrichtung und der Auswerteeinheit.

In Bezug auf das Taktsignal, über das die Datenübertragung zwischen Positionsmesseinrichtung und Auswerteeinheit synchronisiert wird, ist ferner zu beachten, dass zur Durchführung des erfindungsgemäßen Verfahrens die entsprechende Übertragungs-Taktfrequenz $f_C$ vorzugsweise in der Größenordnung $f_C \approx 100 - 200$ kHz gewählt wird. Damit wird die erforderliche Übertragungs-Taktfrequenz $f_C$ für die Durchführung des erfindungsgemäßen Verfahrens deutlich niedriger gewählt als die Übertragungs-Taktfrequenz $f_C$ im eigentlichen Messbetrieb, die etwa $f_C = 4$MHz betragen kann.

Grundsätzlich erweist sich als vorteilhaft, dass die Übertragungs-Taktfrequenz $f_C$ zur Durchführung des erfindungsgemäßen Verfahrens so gewählt wird, dass die zu erwartende Signallaufzeit $t_D$ kleiner als eine Taktperiode t mit der Übertragungs-Taktfrequenz $f_C$ übertragenen Taktsignales auf der Taktleitung ist:

$$t_D < 1/f_C = t \qquad \text{(Gl. 1)}$$

Im nachfolgend erläuterten Beispiel kann unter Einhaltung dieser Bedingung sichergestellt werden, dass die Erfassung der Signallaufzeit $t_D$ tatsächlich korrekt erfolgt.

Die beiden Figuren 2c und 2d veranschaulichen den zeitlichen Signalverlauf auf der Datenleitung; hierbei zeigt Fig. 2c den Signalverlauf an der Positionsmesseinrichtung, während in Fig. 2d der Signalverlauf an der Auswerteeinheit bzw. Folgeelektronik gezeigt ist. Auch hier ist wieder ein zeitlicher Versatz zwischen den Datensignalen an der Positionsmesseinrichtung und an der Auswerteeinheit vorhanden, wiederum verursacht durch die Signallaufzeiten auf der Übertragungsstrecke. So wird beispielsweise zum Zeitpunkt $t_{20}$ ein binäres Datenwort in Form eines 6-Bit Modebefehles von der Auswerteeinheit an die Positionsmesseinrichtung geschickt, das dort aber verzögerungsbedingt erst zum Zeitpunkt $t_{30}$ ankommt.

Über den übertragenen Modebefehl wird von der Auswerteeinheit nunmehr die Übertragung von Daten, beispielsweise Positionsdaten, in Form eines entsprechenden binären Datenwortes angefordert. Nach dem Aufbereiten der entsprechenden Daten für die serielle Übertragung beginnt die Positionsmesseinrichtung zum Zeitpunkt $t_{40}$ mit der Übertragung der Daten in Form eines binären Datenwortes. Aufgrund der resultierenden Signallaufzeit über die Übertragungsstrecke kommt das entsprechende Datenwort erst zum Zeitpunkt $t_{50}$ an der Auswerteeinheit an.

Als zu bestimmende Signallaufzeit $t_{D,i}$, die durch die Übertragungsstrecke verursacht wird, wird nunmehr die Zeit zwischen dem Zeitpunkt $t_{50}$ und der letzten steigenden Taktflanke des Taktsignales auf der Taktleitung definiert. Im vorliegenden Beispiel liegt zum Zeitpunkt $t_{35}$ zum letzten Mal vor dem Erkennen des Start-Bits eine entsprechende steigende Taktflanke auf Seiten der Auswerteeinheit auf der Taktleitung vor.

Um die Signallaufzeit $t_{D,i}$ zu ermitteln wird zum Zeitpunkt $t_{31}$ auf Seiten der Auswerteeinheit erstmalig ein Zähler gestartet, wie dies in Fig. 2e veranschaulicht ist; der Zähler ist im Blockschaltbild der Figur 1 schematisch mit dem Bezugszeichen 21 angedeutet. Der Zähler zählt mit einer vorgegebenen Zählerfrequenz $f_Z$ hoch, wobei die gewählte Zählerfrequenz $f_Z$ deutlich höher gewählt wird als die im Messbetrieb verwendete Übertragungs-Taktfrequenz $f_C$ des Taktsignales auf der Taktleitung. Vorzugsweise wird hierbei die Zählerfrequenz $f_Z$ mindestens acht mal größer gewählt als die im Messbetrieb verwendete Übertragungs-Taktfrequenz $f_C$, d.h.

$$f_Z \geq 8 * f_C \qquad \text{(Gl. 2)}$$

Wenn beispielsweise im Messbetrieb eine Übertragungs-Taktfrequenz $f_C = 4$ MHz vorgesehen ist, so wird die Zählerfrequenz $f_Z = 32$ MHz gewählt.

Um eine hinreichend genaue und störsichere Ermittlung der Signallaufzeit $t_D$ zu gewährleisten, darf die gewählte Zählerfrequenz $f_Z$ maximal um +/- 10% variieren. Im obigen Beispiel mit $f_Z = 32$ MHz wäre demzufolge noch eine maximale Frequenzvariation von +/- 3,2 MHz tolerierbar.

Der zum Zeitpunkt $t_{31}$ mit einer steigenden Schaltflanke des Taktsignales auf der Taktleitung erstmalig gestartete Zähler zählt nunmehr jeweils solange hoch, bis er entweder durch eine erneute steigenden Schaltflanke des Taktsignales neu gestartet wird oder aber durch die steigende Taktflanke des ankommenden Startbits des übertragenen Datenwortes der aktuelle Zählerstand Z erfasst bzw. eingespeichert wird. Im dargestellten Beispiel wird gemäß Figur 2e demzufolge der Zähler zu den Zeitpunkten $t_{31}$ bis $t_{35}$ der Zähler durch die steigende Schaltflanke des Taktsignales neu gestartet; zum Zeitpunkt $t_{50}$ wird durch die steigende Taktflanke des ankommenden Startbits des von der Positionsmesseinrichtung übertragenen Datenwortes der aktuelle Zählerstand Z erfasst und eingespeichert.

Aus der bekannten Zählerfrequenz $f_Z$ und dem erfassten Zählerstand kann anschließend auf Seiten der Auswerteeinheit die Signallaufzeit $t_{D,i}$ bestimmt werden, d.h. $t_{D,i} = Z * 1/f_Z$.

Auf dieser Art und Weise wird anschließend vorzugsweise mindestens ein weiteres Mal die Signallaufzeit $t_{D,i}$ (i = 2) bestimmt und aus den einzelnen Signallaufzeiten $t_{D,1}$ und $t_{D,2}$ eine mittlere Signallaufzeit $t_D$ ermittelt. Im vorliegenden Beispiel des erfindungsgemäßen Verfahrens wird insgesamt dreimal auf die erläuterte Art und Weise die Signallaufzeit $t_{D,i}$ bestimmt (i = 1, 2, 3) und anschließend die mittlere Signallaufzeit $t_D$ als arithmetischer Mittelwert aus den einzelnen Signallaufzeit $t_{D,i}$ ermittelt, d.h.

$$t_D = (t_{D,1} + t_{D,2} + t_{D,3})/3 \qquad \text{Gl. (3).}$$

Die mehrmalige Ermittlung der Signallaufzeiten $t_{D,i}$ gewährleistet, dass eventuelle Fehler bei der Ermittlung derselben ausgeschlossen werden können und eine Konsistenzprüfung der ermittelten Einzelwerte $t_{D,i}$ möglich ist. Selbstverständlich können im Rahmen der vorliegenden Erfindung auch mehr als drei Einzelwerte $t_{D,i}$ bestimmt und daraus eine mittlere Signallaufzeit $t_D$ durch die Bildung des arithmetischen Mittelwertes abgeleitet werden.

Als vorteilhaft erweist sich, wenn nach der Mittelwertbildung aus den einzelnen Signallaufzeiten $t_{D,i}$ desweiteren überprüft wird, um welchen Betrag $\Delta t_{D,i}$ die einzelnen Signallaufzeiten $t_{D,i}$ von der mittleren Signallaufzeit $t_D$ abweichen. So kann etwa vorgegeben werden, dass die maximal zulässige Abweichung $\Delta t_{D,i}$ einer einzelnen ermittelten Signallaufzeit $t_{D,i}$ vom Mittelwert $t_D$ maximal 1/8 der Taktdauer T der Übertragungs-Taktfrequenz $f_C$ im Messbetrieb sein darf, d.h.

$$\Delta t_{D,i} < (1/8) * (1/f_C) \qquad\qquad \text{Gl. (4)}$$

Im Fall einer unzulässig größeren Abweichung würde seitens der Auswerteeinheit eine Fehlermeldung ausgegeben und die Bestimmung der Signallaufzeiten $t_{D,i}$ wiederholt usw..

Nachdem derart die Signallaufzeit $t_D$ bestimmt wurde, kann diese Größe nachfolgend bei der Verarbeitung der von der Positionsmesseinrichtung empfangenen Daten auf Seiten der Auswerteeinheit berücksichtigt werden.

Abschließend sei eine weitere Ausgestaltung der seriellen Datenübertragung zwischen der Positionsmesseinrichtung und der nachgeordneten Auswerteeinheit erläutert. Dieses Vorgehen erweist sich insbesondere bei langen Übertragungsstrecken und den sich daraus ergebenden Signallaufzeiten als vorteilhaft, wenn vorab in der erfindungsgemäßen Art und Weise die Signallaufzeit $t_D$ bestimmt wurde.

So wird hierbei vorgesehen, im Messbetrieb bei jeder Anforderung von Daten von der Positionsmesseinrichtung zunächst dafür zu sorgen, dass die Positionsmesseinrichtung keine Daten mehr in Richtung der Auswerteeinheit sendet. Auf diese Art und Weise soll eine ansonsten mögliche Kollision auf der Datenleitung vermieden werden. Zu diesem Zweck wird auf der Taktleitung im Fall einer Datenanforderung zunächst ein Verzögerungs-Signal mit logischem LOW-Pegel von der Auswerteeinheit an die Positionsmesseinrichtung übertragen, das eine bestimmte, vorgegebene Zeitdauer $t_{ST}$ besitzt. Erst nach dieser Zeitdauer $t_{ST}$ wird das eigentliche Taktsignal mit der jeweiligen Übertragungstaktfrequenz $f_C$ in üblicher Art und Weise übertragen und die Datenübertragung abgewickelt. Die erste Periode des übertragenen Taktsignales setzt sich demzufolge aus der Übertragung des Verzögerungs-signales mit logischem LOW-Pegel und Dauer $t_{ST}$ und einem anschließenden logischen HIGH-Pegel mit der Übertragungs-Taktdauer $t/2$ zusammen. Die Zeitdauer $t_{ST}$ des Verzögerungs-Signales wird z.B. $t_{ST} = 1{,}5\ \mu s$ gewählt.

Neben dem erläuterten Beispiel existieren selbstverständlich noch weitere Ausführungsvarianten des erfindungsgemäßen Verfahrens.

**Patentansprüche**

1.  Verfahren zum Betrieb einer Positionsmesseinrichtung (10), der eine Auswerteeinheit (20) zur Weiterverarbeitung der Positionsdaten nachgeordnet ist, wobei eine Ermittlung der Signallaufzeit ($t_D$) zwischen der Positionsmesseinrichtung (10) und der Auswerteeinheit (20) vor dem Messbetrieb erfolgt, indem

    - von der Positionsmesseinrichtung (10) die serielle Übertragung von Daten auf einer Datenleitung (31.1, 31.2) in Richtung der Auswerteeinheit (20) angefordert wird,
    - zu einem definierten Start-Zeitpunkt ($t_{31}$ - $t_{35}$) auf Seiten der Auswerteeinheit (20) ein Zähler (21) gestartet wird, der mit einer vorgegebenen Zählerfrequenz ($f_Z$) hochzählt,
    - der aktuelle Zählerstand (Z) zu einem Zeitpunkt ($t_{50}$) erfasst wird, sobald auf Seiten der Auswerteeinheit (20) die ankommenden Daten detektiert werden,
    - aus dem erfassten Zählerstand (Z) die Signallaufzeit ($t_{D,i}$) ermittelt wird.

2.  Verfahren nach Anspruch 1, wobei auf diese Art und Weise mehrmals die Signallaufzeit ($t_{D,i}$) ermittelt und zur Weiterverarbeitung eine mittlere Signallaufzeit ($t_D$) aus den einzelnen Signallaufzeiten ($t_{D,i}$) bestimmt wird.

3.  Verfahren nach Anspruch 1, wobei die vorgegebene Zählerfrequenz ($f_Z$) deutlich höher gewählt wird als die im Messbetrieb verwendete Übertragungs-Taktfrequenz ($f_C$) eines Taktsignales auf einer Taktleitung (30.1, 30.2), über das die Übertragung der Daten auf der Datenleitung (31.1, 31.2) getaktet wird.

4.  Verfahren nach Anspruch 3, wobei die Zählerfrequenz ($f_Z$) mindestens acht mal größer als die Übertragungs-Taktfrequenz ($f_C$) im Messbetrieb gewählt wird.

**5.** Verfahren nach Anspruch 3, wobei die Zählerfrequenz ($f_Z$) eine maximale Frequenzvariation von +/- 10% aufweist.

**6.** Verfahren nach Anspruch 1, wobei der Zähler (21) durch eine steigende Schaltflanke eines Taktsignales auf der Taktleitung (30.1, 30.2), über das die Übertragung der Daten auf der Datenleitung (31.1, 31.2) getaktet wird, jeweils wieder neu gestartet wird.

**7.** Verfahren nach Anspruch 2, wobei dreimal die Signallaufzeit ($t_{D,i}$) ermittelt wird und anschließend die mittlere Signallaufzeit ($t_D$) als arithmetischer Mittelwert aus den einzelnen Signallaufzeiten ($t_{D,i}$) bestimmt wird.

**8.** Verfahren nach Anspruch 2, wobei

- nach der Mittelwertbildung aus den einzelnen Signallaufzeiten ($t_{D,i}$) ferner überprüft wird, um welchen Betrag die einzelnen Signallaufzeiten ($t_{D,i}$) von der mittleren Signallaufzeit ($t_D$) abweichen und
- im Fall einer unzulässig großen Abweichung eine Fehlermeldung ausgegeben wird.

**9.** Verfahren nach Anspruch 1, wobei als Daten zur Bestimmung der Signallaufzeiten ($t_{D,i}$) Positionsdaten als binäre Datenwörter übertragen werden und der aktuelle Zählerstand (Z) erfasst wird, sobald die steigende Flanke eines Start-Bits eines binären Datenwortes auf Seiten der Auswerteeinheit (20) detektiert wird.

**10.** Verfahren nach Anspruch 3, wobei die Übertragungs-Taktfrequenz ($f_C$) auf der Taktleitung (30.1, 30.2) während der Ermittlung der Signallaufzeit ($t_{D,i}$) deutlich niedriger gewählt wird als die Übertragungs-Taktfrequenz ($f_C$) auf der Taktleitung (30.1, 30.2) im Messbetrieb.

**11.** Verfahren nach Anspruch 10, wobei die Übertragungs-Taktfrequenz ($f_C$) auf der Taktleitung (30.1, 30.2) während der Ermittlung der Signallaufzeiten ($t_{D,i}$) zwischen 100 und 200 kHz gewählt wird.

**12.** Verfahren nach Anspruch 1, wobei die Übertragungs-Taktfrequenz ($f_C$) auf der Taktleitung (30.1, 30.2) während der Ermittlung der Signallaufzeiten ($t_{D,i}$) gemäß folgender Bedingung gewählt wird:

$$t_D < 1/f_C.$$

**13.** Verfahren nach Anspruch 1, wobei die Ermittlung der Signallaufzeit ($t_D$') nach jeder Änderung in der Konfiguration des Systems aus Positionsmesseinrichtung (10), Übertragungsstrecke und Auswerteeinheit (20) durchgeführt wird.

**14.** Verfahren nach Anspruch 1, wobei die Ermittlung der Signallaufzeit ($t_D$) nach jeder Unterbrechung in der Spannungsversorgung der Positionsmesseinrichtung (10) und/oder der Auswerteeinheit (20) durchgeführt wird.

**15.** Verfahren nach Anspruch 13 oder 14, wobei das jeweils erneute Ermitteln der Signallaufzeit ($t_D$) automatisch erfolgt.

**16.** Verfahren nach mindestens einem der vorangehenden Ansprüche, wobei im nachfolgenden Messbetrieb auf der Taktleitung (30.1, 30.2) im Fall einer Datenanforderung zunächst ein Verzögerungs-Signal mit logischem LOW-Pegel von der Auswerteeinheit (20) an die Positionsmesseinrichtung (10) übertragen wird, das eine bestimmte Zeitdauer ($t_{ST}$) besitzt

**17.** Positionsmesseinrichtung, geeignet zur Durchführung eines Verfahrens nach einem der vorhergehenden Ansprüche.

**Claims**

**1.** Method for operating a position measuring device (10), downline of which an evaluation unit (20) is connected for further processing of the position data, wherein the signal transit time ($t_D$) between the position measuring device (10) and the evaluation unit (20) is determined prior to the measurement operation in that

• the serial transmission of data on a data line (31.1, 31.2) in the direction of the evaluation unit (20) is requested by the position measuring device (10),

• at a defined starting time ($t_{31}$ - $t_{35}$) by way of the evaluation unit (20) a counter (21) is started, which increments at a predetermined counter frequency ($f_Z$),
• the current counter reading (Z) is determined at a time point ($t_{50}$) as soon as the incoming data are detected by way of the evaluation unit (20),
• the signal transit time ($t_{D,i}$) is determined from the detected counter reading (Z).

2. Method according to Claim 1, wherein in this manner the signal transit time ($t_{D,i}$) is determined multiple times and for further processing a mean signal transit time ($t_D$) is determined from the individual signal transit times ($t_{D,i}$).

3. Method according to Claim 1, wherein the predetermined counter frequency ($f_Z$) is selected to be clearly higher than the transmission clock frequency ($f_c$) of a timing signal on a clock line (30.1, 30.2) used in the measurement operation, via which the transmission of data on the data line (31.1, 31.2) is clocked.

4. Method according to Claim 3, wherein the counter frequency ($f_Z$) is selected to be at least eight times higher than the transmission clock frequency ($f_c$) in the measurement operation.

5. Method according to Claim 3, wherein the counter frequency ($f_z$) has a maximum frequency variation of +/- 10%.

6. Method according to Claim 1, wherein the counter (21) is respectively restarted once again through an ascending signal edge of a timing signal on the clock line (30.1, 30.2), via which the transmission of data on the data line (31.1, 31.2) is clocked.

7. Method according to Claim 2, wherein the signal transit time ($t_{D,i}$) is determined three times and the mean signal transit time ($t_D$) is then determined from the individual signal transit times ($t_{D,i}$) as an arithmetic mean.

8. Method according to Claim 2, wherein

• after formation of the mean from the individual signal transit times ($t_{D,i}$) it is further examined by what amount the individual signal transit times ($t_{D,i}$) deviate from the mean signal transit time ($t_D$) and
• in the case of an impermissibly high deviation an error message is emitted.

9. Method according to Claim 1, wherein position data in the form of binary data words are transmitted as data for the determination of the signal transit times ($t_{D,i}$), and the current counter reading (Z) is determined as soon as the ascending edge of a start bit of a binary data word is detected by way of the evaluation unit (20).

10. Method according to Claim 3, wherein the transmission clock frequency ($f_c$) on the clock line (30.1, 30.2) during determination of the signal transit time ($t_{D,i}$) is selected to be clearly lower than the transmission clock frequency ($f_c$) on the clock line (30.1, 30.2) in the measurement operation.

11. Method according to Claim 10, wherein the transmission clock frequency ($f_c$) on the clock line (30.1, 30.2) is selected to between 100 and 200 kHz during determination of the signal transit times ($t_{D,i}$).

12. Method according to Claim 1, wherein the transmission clock frequency ($f_c$) on the clock line (30.1, 30.2) is selected during determination of the signal transit times ($t_{D,i}$) in accordance with the following equation:

$$t_D < 1/f_c.$$

13. Method according to Claim 1, wherein the determination of the signal transit time ($t_D$') is performed after every change in configuration of the system comprising position measuring device (10), transmission link and evaluation unit (20).

14. Method according to Claim 1, wherein the determination of the signal transit time ($t_D$) is performed after each interruption in the voltage supply of the position measuring device (10) and/or the evaluation unit (20).

15. Method according to Claim 13 or 14, wherein the respectively renewed determination of the signal transit time ($t_D$) occurs automatically.

**16.** Method according to at least one of the preceding claims, wherein in the subsequent measurement operation on the clock line (30.1, 30.2) in the case of a data request, a delay signal having a specific duration ($t_{ST}$) is firstly transmitted with a logic LOW level from the evaluation unit (20) to the position measuring device (10).

**17.** Position measuring device suitable for carrying out a method according to one of the preceding claims.

**Revendications**

**1.** Procédé d'exploitation d'un dispositif de mesure de position (10) auquel est associée une unité de traitement (20) pour l'exploitation des données de position, selon lequel une mesure du temps de propagation du signal ($t_D$) entre le dispositif de mesure de position (10) et l'unité de traitement (20) est réalisée avant le fonctionnement en mesure, consistant en ce que

- le dispositif de mesure de position (10) déclenche la transmission en série de données sur une ligne de données (31.1, 31.2) en direction de l'unité de traitement (20),
- à un instant de démarrage ($t_{31}$ - $t_{35}$) défini un compteur (21) est activé côté unité de traitement (20), qui effectue un comptage avec une fréquence de compteur ($f_Z$) prédéterminée,
- la position de compteur (Z) actuelle à un instant ($t_{50}$) est enregistrée dès que les données entrantes sont détectées côté unité de traitement (20),
- le temps de propagation du signal ($t_{D,i}$) est calculé à partir de la position de compteur (Z) enregistrée.

**2.** Procédé selon la revendication 1, selon lequel on détermine plusieurs fois, de cette manière, le temps de propagation du signal ($t_{D,i}$) et, pour l'exploitation, on détermine un temps de propagation de signal ($t_D$) moyen à partir des différents temps de propagation de signal ($t_{D,i}$).

**3.** Procédé selon la revendication 1, selon lequel on choisit la fréquence de compteur ($f_Z$) nettement supérieure à la fréquence d'horloge de transmission ($f_C$) utilisée en fonctionnement de mesure d'un signal d'horloge sur une ligne d'horloge (30.1, 30.2), par l'intermédiaire duquel la transmission des données sur la ligne de données (31.1, 31.2) est cadencée.

**4.** Procédé selon la revendication 3, selon lequel on choisit la fréquence de compteur ($f_Z$) au moins huit fois supérieure à la fréquence d'horloge de transmission ($f_c$) en mode mesure.

**5.** Procédé selon la revendication 3, selon lequel la fréquence de compteur ($f_Z$) présente une variation de fréquence maximale de +/- 10%.

**6.** Procédé selon la revendication 1, selon lequel le compteur (21) est redémarré chaque fois par un flanc de commutation ascendant d'un signal d'horloge sur la ligne d'horloge (30.1, 30.2), par l'intermédiaire duquel la transmission des données sur la ligne de données (31.1, 31.2) est cadencée.

**7.** Procédé selon la revendication 2, selon lequel on détermine trois fois le temps de propagation de signal ($t_{D,i}$), puis on détermine le temps de propagation de signal ($t_D$) moyen en tant que moyenne arithmétique des différents temps de propagation de signal ($t_{D,i}$).

**8.** Procédé selon la revendication 2, selon lequel

- après le calcul de la moyenne à partir des différents temps de propagation de signal ($t_{D,i}$), on examine de quelle valeur les différents temps de propagation de signal ($t_{D,i}$) s'écartent du temps de propagation de signal ($t_D$) moyen et,
- dans le cas d'un écart anormalement élevé un signal de défaut est délivré.

**9.** Procédé selon la revendication 1, selon lequel on transmet comme données pour la détermination des temps de propagation de signal ($t_{D,i}$) des données de position sous forme de mots binaires et on lit la position de compteur (Z) actuelle dès que le flanc ascendant d'un bit de démarrage d'un mot binaire est détecté côté unité de traitement (20).

**10.** Procédé selon la revendication 3, selon lequel on choisit la fréquence d'horloge de transmission ($f_C$) sur la ligne d'horloge (30.1, 30.2) pendant la détermination du temps de propagation de signal ($t_{D,i}$) nettement inférieure à la fréquence d'horloge de transmission ($f_C$) sur la ligne d'horloge (30.1, 30.2) en fonctionnement de mesure.

11. Procédé selon la revendication 10, selon lequel on choisit la fréquence d'horloge de transmission ($f_C$) sur la ligne d'horloge (30.1, 30.2) pendant la détermination du temps de propagation de signal ($t_{D,i}$) entre 100 et 200 kHz.

12. Procédé selon la revendication 1, selon lequel on choisit la fréquence d'horloge de transmission ($f_C$) sur la ligne d'horloge (30.1, 30.2) pendant la détermination des temps de propagation de signal ($t_{D,i}$) conformément à la condition :

$$T_D < 1/f_C.$$

13. Procédé selon la revendication 1, selon lequel on procède à la détermination du temps de propagation de signal ($t_{D'}$) après chaque modification dans la configuration du système formé du dispositif de mesure de position (10), du trajet de transmission et l'unité de traitement (20).

14. Procédé selon la revendication 1, selon lequel on procède à la détermination du temps de propagation de signal ($t_{D'}$) après chaque interruption dans l'alimentation électrique du dispositif de mesure de position (10) et/ou de l'unité de traitement (20).

15. Procédé selon la revendication 13 ou 14, selon lequel la nouvelle détermination du temps de propagation de signal ($t_D$) a lieu de manière automatique.

16. Procédé selon au moins une des revendications précédentes, selon lequel lors du fonctionnement de mesure consécutif, dans le cas d'une demande de données, un signal de temporisation à niveau FAIBLE logique est envoyé d'abord par l'unité de traitement (20) au dispositif de mesure (10) sur la ligne d'horloge (30.1, 30.2), lequel signal présente une durée ($t_{ST}$) déterminée.

17. Dispositif de mesure de position adapté pour la mise en oeuvre d'un procédé selon une des revendications précédentes.

FIG. 1

EP 1 395 885 B1

Übertragungs-Taktfrequenz $f_C \approx 100$ kHz - 200 kHz

FIG. 2a

zum Meßgerät zu
sendender Takt

2t  Modebefehl  2t

$t_0$

FIG. 2b

Takt am Meßgerät

2t  2t

$t_{10}$

FIG. 2c

Daten
am Meßgerät

Modebefehl

0 0 0 1 1 1

Daten

Start Alarm CRC CRC CRC CRC CRC

$t_{30}$

$t_{40}$

FIG. 2d

Daten
Folgeelektronik

Modebefehl

0 0 0 1 1 1

Daten

Start Alarm CRC CRC CRC CRC CRC

$t_{D,i}$

$t_{20}$

$t_{50}$

FIG. 2e

Zähler Start

$t_{31}$ $t_{32}$ $t_{33}$ $t_{34}$ $t_{35}$

FIG. 3